# EUROPEAN PATENT SPECIFICATION

(11) **EP 3 867 701 B1**
(45) Date of publication and mention of the grant of the patent: **09.07.2025**
(21) Application number: 19873814.8
(22) Date of filing: 17.10.2019
(51) Int. Cl.: B65D 19/06, B65D 81/05, B65D 81/20, B65D 85/48, E06B 9/24, E06B 3/67, G02F 1/15

(54) **COMPONENT FOR AN ELECTROCHROMIC PREFORM AND ASSOCIATED SYSTEM AND METHOD**
KOMPONENTE FÜR EINE ELEKTROCHROME VORFORM UND ZUGEHÖRIGES SYSTEM UND VERFAHREN
COMPOSANT POUR PRÉFORME ÉLECTROCHROME ET SYSTÈME ET PROCÉDÉ ASSOCIÉ

(30) Priority: 17.10.2018 US 201862746727 P
(43) Date of publication of application: 25.08.2021
(73) Proprietor: Sage Electrochromics, Inc., Faribault, Minnesota 55021 (US)
(72) Inventor: TAYLOR, Clifford Lee, Nerstrand, Minnesota 55053 (US)
(74) Representative: Zimmermann & Partner Patentanwälte mbB
(86) International application number: PCT/US2019/056639
(87) International publication number: WO 2020/081756

(56) References cited:
- EP-A1- 1 535 859
- EP-A2- 0 270 512
- WO-A1-96/02435
- JP-A- 2010 006 472
- US-A- 3 363 390
- US-A- 3 451 169
- US-A- 4 681 218
- US-A- 4 858 413
- US-A- 5 040 684
- US-A- 5 813 536
- US-A1- 2003 141 213
- US-A1- 2005 103 668
- US-A1- 2013 306 515
- "Fixed panel kits (U channel & gasket on 3 sides)", SLIDING-DOORSTUFF, 31 August 2016 (2016-08-31), XP055702367, Retrieved from the Internet <URL:https://www.sliding-doorstuff.co.uk/item/275/fixed-panel-kits-u-channe1-gasket-on-3-sides> [retrieved on 20200125]

## Description

### TECHNICAL FIELD

The present disclosure relates to electrochromic preforms, and more particularly to systems, methods, and components associated with electrochromic preforms.

### BACKGROUND ART

Electrochromic devices generally include an electrochromic element that can be selectively tinted between various states of light transmissibility. Electrochromic devices are particularly effective as windows in buildings, such as commercial and residential buildings, as they allow an operator, such as a room occupant or building supervisor, to quickly and precisely adjust room ambience.

Windows vary considerably both in their shape and size. Accordingly, electrochromic devices for windows must be made to fit various shaped and sized openings. Building operators, owners, and occupants continue to demand improved systems and methods for electrochromic devices, particular for fabrication and installation of the electrochromic devices.

US 4 858 413 A discloses an edge forming profile for planar parts of furniture. US 3 451 169 A discloses an edge protector for glass, metal or other sheet materials. US 3 363 390 A discloses a panel-framing strip. US 2013/306515 A1 discloses an edge protector for protecting curved edges of sheets of glass. JP 2010 006472 A discloses a packing method for solar cell and a packed body obtained by such a method.

### SUMMARY OF THE INVENTION

The present invention provides a component adapted to couple with an edge of an electrochromic preform according to claim 1, a system for containing electrochromic preforms according to claim 6 and a method of transporting an electrochromic preform according to claim 13.

### BRIEF DESCRIPTION OF THE DRAWINGS

Embodiments are illustrated by way of example and are not intended to be limited in the accompanying figures.
FIGS. 1 to 5 include perspective views of systems in accordance with embodiments described herein during loading of electrochromic preforms.
FIG. 6 includes a cross-sectional view of a component adapted to be installed on an edge of an electrochromic preform in accordance with an embodiment.
FIG. 7 includes a perspective view of the component in accordance with an embodiment.
FIG. 8 includes a top view of the system in accordance with an embodiment with electrochromic preforms disposed therein.
FIG. 9 includes an expanded top view of the system in FIG. 8, as seen in circle A.
FIG. 10 includes a perspective view of a plurality of systems disposed inside a container for shipping in accordance with an embodiment.

### DETAILED DESCRIPTION OF THE PREFERRED EMBODIMENT(S)

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings. However, other embodiments can be used based on the teachings as disclosed in this application.

The terms "comprises," "comprising," "includes," "including," "has," "having" or any other variation thereof, are intended to cover a non-exclusive inclusion. For example, a method, article, or apparatus that comprises a list of features is not necessarily limited only to those features but may include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

The terms "generally," "substantially," "approximately," and the like are intended to cover a range of deviations from the given value. In a particular embodiment, the terms "generally," "substantially," "approximately," and the like refer to deviations in either direction of the value within 10% of the value, within 9% of the value, within 8% of the value, within 7% of the value, within 6% of the value, within 5% of the value, within 4% of the value, within 3% of the value, within 2% of the value, or within 1% of the value.

Also, the use of "a" or "an" is employed to describe elements and components described herein. This is done merely for convenience and to give a general sense of the scope of the invention. This description should be read to include one, at least one, or the singular as also including the plural, or vice versa, unless it is clear that it is meant otherwise. For example, when a single item is described herein, more than one item may be used in place of a single item. Similarly, where more than one item is described herein, a single item may be substituted for that more than one item.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in textbooks and other sources within the electrochromic arts.

In accordance with an aspect, a system for containing an electrochromic preform includes a rigid structure defining a compartment and a vapor barrier disposed within the compartment and adapted to define a selectively sealable internal volume adapted to receive the electrochromic preform. In an embodiment, the rigid structure can have a multi-piece construction. In another embodiment, the rigid structure can be reusable. The internal volume is adapted to receive a plurality of electrochromic preforms. The system further includes a reference tool adapted for aligning at least one of the plurality of electrochromic preforms. In a particular instance, the reference tool can be used to align a first electrochromic preform of the plurality of electrochromic preforms. Subsequent electrochromic preforms can be aligned relative to the first electrochromic preform.

In accordance with another aspect, a component adapted to couple with an edge of an electrochromic preform includes a body defining an electrochromic preform engagement portion and a tool engagement portion coupled with the electrochromic preform portion. The electrochromic preform engagement portion is pivotally coupled with the tool engagement portion. Reducing a dimension of the tool engagement portion increases a corresponding dimension in the electrochromic preform engagement portion. An operator, machine, or robot can thus selectively adjust the electrochromic preform engagement portion to install the component relative to the edge of the electrochromic preform. After installation, the operator, machine, or robot can release the component, leaving the component coupled with the edge of the electrochromic preform.

In accordance with a further aspect, a method of transporting an electrochromic preform includes, at a first location, moving the electrochromic preform toward a selectively sealable internal volume defined by a vapor barrier. The method further includes sealing the selectively sealable internal volume with the electrochromic preform inside and transporting the electrochromic preform to a secondary location. In an embodiment, the internal volume can be adapted to receive a plurality of electrochromic preforms. In a particular embodiment, the electrochromic preforms can be devoid of bus bars or otherwise be non-operational.

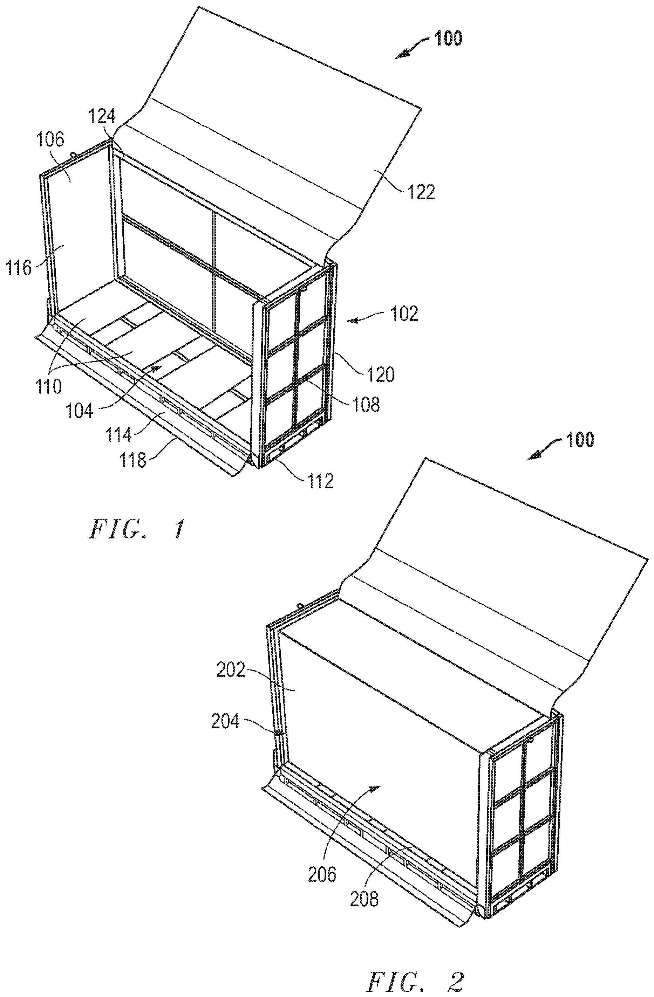

FIG. 1 illustrates a system 100 for containing electrochromic preforms in accordance with an embodiment. The system 100 is illustrated in FIG. 1 empty - without electrochromic preforms. The system 100 includes a rigid structure 102 defining a compartment 104. In an embodiment, the rigid structure 102 can include at least 6 major sidewalls. In a more particular embodiment, the rigid structure 102 can define a generally cuboidal shape. In an embodiment, the compartment 104 can have a volume of at least 0.15 m², at least 0.25 m², at least 0.5 m², at least 0.75 m² , at least 1 m², at least 2 m², or at least 3 m². In certain instances, the compartment 104 can have a shape that is the same as, or generally similar to, the shape of the rigid structure 102. In an embodiment, the compartment 104 can include one or more objects extending from the rigid structure 102 into the compartment 104, such as for example, stays, supports, dividers, tie anchors, or any combination thereof.

In an embodiment, the rigid structure 102 can have a multi-piece construction including a plurality of discrete elements coupled together. For instance, in an embodiment, the rigid structure 102 can include one or more sidewalls 106 and a frame 108. The one or more sidewall 106 can have same or similar shapes, compositions, sizes, dimensions, features, or any combination thereof as compared with respect to one another. In an embodiment, at least one of the sidewalls 106 can be supported by the frame 108. In an embodiment, at least one of the sidewalls 106 can be coupled with the frame 108. By way of non-limiting example, the sidewalls 106 and frame 108 can be coupled together by threaded or non-threaded fasteners, clips, ties, brackets, adhesives, interference fit, or any combination thereof. In a more particular embodiment, a plurality of sidewalls 106, such as all of the sidewalls 106 can be coupled with the frame 108. In another embodiment, at least one of the sidewalls 106 can float relative to the frame 108. For example, the sidewalls 106 can be non-fixedly coupled with the frame 108, such as leaned against the frame 108.

In certain instances, the rigid structure 102 can be collapsible, foldable, or otherwise deformable between an in-use configuration and a not-in-use configuration. In such a manner, the rigid structure 102 can be transported or stored empty with a reduced volumetric footprint.

In an embodiment, a bottom surface 112 of the rigid structure 102 can include a reinforcement, such as a reinforced frame, additional framing, or a combination thereof. In a particular embodiment, the bottom surface 112 of the rigid structure 102 can include an area adapted to receive arms of a tool, such as a forklift, for moving the system 100. In certain instances, the system 100 can be adapted to be transported with a manually operated tool, such as a forklift. In another instance, the system 100 can be adapted to be transported by an autonomous vehicle, such as a robot. In certain embodiments, the system 100 can include indicia, features, or other elements adapted to align the autonomous robot with respect to the system 100.

One or more pads 110 can be disposed within the compartment 104, such as along, or adjacent to, one or more of the major surfaces of the rigid structure 102, such as for example, along the bottom surface 112 of the rigid structure 102. The one or more pads 110 can include dampening elements, cushions, supports, or any combination thereof. In certain instances, at least one of the one or more pads 110 can include a coating applied to the pad 110. The coating can include a material adapted to increase a coefficient of friction of the pad 110. In certain instances, the coating can include a high friction coating adapted to prevent slipping of the electrochromic preforms (described in greater detail below).

In an embodiment, at least one of the one or more pads 110 can have a generally cuboidal shape. In another embodiment, at least one of the one or more pads 110 can have a shape including contours, such as ridges, crests, castellations, nobs, indents, other shaped surfaces, or any combination thereof. In such a manner, the pad 110 can define discrete storage areas for receiving the electrochromic preform (described in greater detail below).

In the illustrated embodiment, the bottom surface 112 of the rigid structure 102 includes a plurality of pads 110 disposed in the compartment 104 and equally spaced apart from one another. The plurality of pads 110 are illustrated all having a same size and shape. In a non-illustrated embodiment, at least two of the pads 110 can have different sizes or shapes as compared to one another. In another embodiment, at least two sets of pads 110 can be spaced apart from one another by different distances. For instance, a first set of pads can be interspaced by a first distance different from a second distance between a second set of pads. In a further embodiment, a first set of pads can be disposed at a different relative angle with respect to a second set of pads. In certain instances, at least one of the one or more pads 110 can be coupled with the rigid support 102. For instance, the at least one pad 110 can be coupled with one or more of the sidewalls 106, the frame 108, or a combination thereof. By way of non-limiting example, the at least one pad 110 can be coupled to the sidewall 106, the frame 108, or both by a threaded or non-threaded fastener, clips, ties, brackets, adhesives, interference fit, or any combination thereof.

In an embodiment, at least one of the one or more pads 110 can have a density no greater than 15 lbs/ft³, no greater than 10 lbs/ft³, no greater than 8 lbs/ft³, no greater than 6 lbs/ft³, no greater than 4 lbs/ft³, no greater than 2 lbs/ft³, or no greater than 1 lbs/ft³, with 1 lbs/ft³ being approximately 16.0185 kg/m³. In another embodiment, at least one of the one or more pads 110 can include foam. In a particular embodiment, at least one of the one or more pads 110 can include open cell foam. In another particular embodiment, at least one of the one or more pads 110 can include closed fell foam. Exemplary foams include compressed or densified polyester, low density polyurethane foam, medium density polyurethane foam, high density polyurethane foam, dry fast open cell foam, polyethylene foam, or any combination thereof.

FIG. 1 illustrates the rigid structure 102 in accordance with an embodiment in an open configuration whereby the rigid structure 102 is adapted to receive a load of transportable elements, such as electrochromic preforms described in greater detail below. In an embodiment, the rigid structure 102 can be opened by pivoting a cover 120 from a closed position to an open position to reveal the compartment 104. In a particular embodiment, the cover 120 can be adapted to pivot at least 10°, at least 15°, at least 20°, at least 25°, at least 30°, at least 45°, at least 60°, at least 90°, at least 120°, or at least 180°. In another particular embodiment, the cover 120 can be adapted to pivot no greater than 300°, no greater than 270°, or no greater than 240°.

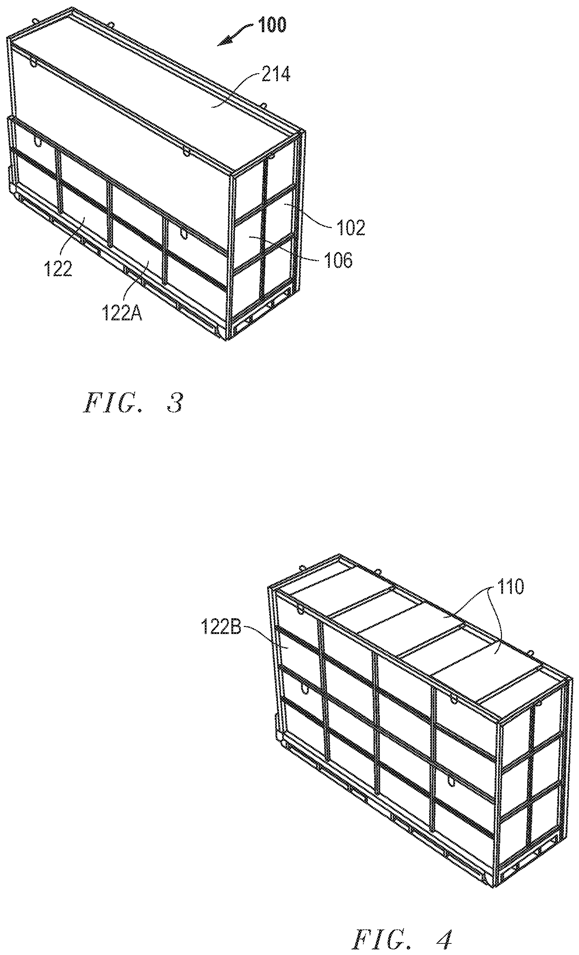

In a particular embodiment, the cover 120 can be adapted to remain coupled with at least one of the sidewalls 106 when the rigid structure 102 is open and adapted to receive transportable elements. In certain instances, the rigid structure 102 can further include a front portion 122 (FIG. 3) adapted to be selectively opened to reveal the compartment 104. In certain instances, at least one of the sidewalls 106, such as for example, the front portion 122, can include a multi-piece construction. In an embodiment, at least one of the sidewalls 106 can include at least two discrete components coupled together. In an embodiment, the front portion 122 can include a first portion 122A and a second portion 122B (FIG. 4). In a particular embodiment, the first and second portions 122A and 122B can have a same shape, a same size, or a combination thereof. In a particular instance, the first and second portions 122A and 122B can be installed or removed separately, such as successively, to open and close the rigid structure 102.

In an embodiment, opening the rigid structure 102 can be performed by removing, deforming, translating, pivoting, or otherwise operating on at least a portion of at least one of the sidewalls 106 of the rigid structure 102, at least a portion of at least two of the sidewalls 106 of the rigid structure 102, or at least a portion of at least three of the sidewalls 106 of the rigid structure 102. For example, in a particular embodiment, the cover 120 can be pivoted between open and closed positions and another sidewall 106 of the rigid structure 102 can be removed therefrom to permit access to the compartment 104. In an embodiment, at least one of the sidewalls 106 (optionally including the cover 120) can be coupled together by one or more fasteners (not illustrated), including, for example, one or more hinges, locks, snap fit components, threaded or non-threaded fasteners, bayonet connections, hooks, splines, clips, latches, rings, stapes, bands, ties, or any combination thereof. In certain instances, all of the sidewalls 106 can be coupled together by a common fastener type. In other instances, at least one of the sidewalls 106 (such as the cover 120) can be coupled to at least one of the other sidewalls 106 by a unique fastener type.

The system 100 further includes a vapor barrier 114 disposed in the compartment 104 of the rigid structure 102. In certain instances, the vapor barrier 114 can include a discrete element adapted to fit inside the compartment 104. In other instances, the vapor barrier 114 can be integral with the rigid structure 102.

In an embodiment, the vapor barrier 114 can be waterproof. In another embodiment, the vapor barrier 114 can be greaseproof. In a further embodiment, the vapor barrier 114 can be flexible. In yet a further embodiment, the vapor barrier 114 can be heat-sealable. In yet another embodiment, the vapor barrier 114 can be waterproof, greaseproof, flexible, heat-sealable, or any combination thereof.

In certain instances, the vapor barrier 114 can define a shape similar, or generally similar, to the shape of the compartment 104 of the rigid structure 102. In an embodiment, the vapor barrier 114 can be shaped to have a close fit with the rigid structure 102. In certain instances, the vapor barrier 114 can include shaped sections (not illustrated) adapted to conform to the shape of the rigid structure 102 or other components of the system 100, such as for example, the one or more pads 110. For example, in an embodiment, at least one of the one or more pads 110 is disposed between the vapor barrier 114 and the rigid structure 102. The vapor barrier 114 can include recessed portions adapted to contour to the shape of the one or more pads 110.

In an embodiment, the vapor barrier 114 can define a wall thickness in a range of 1 mil and 100 mil, as measured according to ASTM D2103, in a range of 2 mil and 75 mil, in a range of 3 mil and 60 mil, in a range of 4 mil and 40 mil, in a range of 5 mil and 25 mil, or in a range of 6 mil and 10 mil. In a more particular embodiment, the vapor barrier 114 can define a wall thickness of approximately 7 mil, with 1 mil being 0.0254 mm.

In an embodiment, the vapor barrier 114 can define a tensile strength of at least 10 lbs/in, as measured according to ASTM D882, at least 15 lbs/in, at least 20 lbs/in, or at least 25 lbs/in. In another embodiment, the vapor barrier 114 can define a tensile strength of no greater than 100 lbs/in, no greater than 75 lbs/in, or no greater than 50 lbs/in, with 1 lbs/in being approximately 0.175 N/mm.

In an embodiment, the vapor barrier 114 can have an oxygen transmission rate (OTR) in a range of 0.0001 cc/100in²/day and 0.001 cc/100in²/day, as measured according to ASTM D3985, or in a range of 0.0004 cc/100in²/day and 0.0006 cc/100in²/day. In another embodiment, the vapor barrier 114 can have an OTR of at least 0.0001 cc/100in²/day, at least 0.0002 cc/100in²/day, at least 0.0003 cc/100in²/day, at least 0.0004 cc/100in²/day, or at least 0.0005 cc/100in²/day. In a further embodiment, the vapor barrier 114 can have an OTR no greater than 0.005 cc/100in²/day, no greater than 0.004 cc/100in²/day, no greater than 0.003 cc/100in²/day, no greater than 0.002 cc/100in²/day, or no greater than 0.001 cc/100in²/day, with 1 cc/100in²/day being 6450 cm³/m²/24h.

In an embodiment, the vapor barrier 114 can have a water vapor transmission rate (WVTR) in a range of 0.0001 cc/100in²/day and 0.001 cc/100in²/day, as measured according to ASTM F1249, or in a range of 0.0004 cc/100in²/day and 0.0006 cc/100in²/day. In another embodiment, the vapor barrier 114 can have a WVTR of at least 0.0001 cc/100in²/day, at least 0.0002 cc/100in²/day, at least 0.0003 cc/100in²/day, at least 0.0004 cc/100in²/day, or at least 0.0005 cc/100in²/day. In a further embodiment, the vapor barrier 114 can have a WVTR no greater than 0.005 cc/100in²/day, no greater than 0.004 cc/100in²/day, no greater than 0.003 cc/100in²/day, no greater than 0.002 cc/100in²/day, or no greater than 0.001 cc/100in²/day, with 1 cc/100in²/day being 6450 cm³/m²/24h. In certain instances, the vapor barrier 114 can be impermeable. In other instances, the vapor barrier 114 can be semi-permeable.

In an embodiment, the vapor barrier 114 can include a plastic sheet, a foil sheet, or a combination thereof. In an embodiment, the vapor barrier 114 can have a homogenous composition. In another embodiment, the vapor barrier 114 can have a layered composition, including for example, a laminate having a substrate and a vapor impermeable (or semi-permeable) layer. In an embodiment, the vapor barrier 114 can include a polymer, a metal, an alloy, a fibrous material, or any combination thereof.

The vapor barrier 114 can define an internal volume 116 when installed within the rigid structure 102. In an embodiment, the internal volume 116 can have a same, or generally same, shape or size as compared to the compartment 104. In another embodiment, the internal volume 116 can have a different shape or size as compared to the compartment 104. In certain instances, the vapor barrier 114 can be coupled with the rigid structure 102, such as coupled with the sidewall 106 or the frame 108, at one or more locations. In other instances, the vapor barrier 114 can float relative to the rigid structure 102. That is, for example, the vapor barrier 114 can be disposed within the compartment 104 and not be coupled with the rigid structure 102.

In an embodiment, the vapor barrier 114 can define a sealable edge 118 adapted to be selectively sealed to create a sealed internal volume 116. In certain instances, the sealable edge 118 can include an adhesive, a bonding intermediary adapted to enhance sealing, a different characteristic as compared to other portions of the vapor barrier 114, or any combination thereof. In an embodiment, the sealable edge 118 can extend continuously along one edge of the vapor barrier 114, such as along a lower edge.

In an embodiment, the vapor barrier 114 can include a cover 122. The cover 122 can be reconfigurable between open and closed positions to permit selective sealing of the sealable edge 118 therewith. In an embodiment, the cover 122 of the vapor barrier 114 can be disposed adjacent the cover 120 of the rigid structure 102. In a more particular embodiment, the cover 122 can be adapted to pivot at a location adjacent to a cover 120 pivot point. In yet a more particular embodiment, the cover 122 of the vapor barrier 114 can be adapted to remain adjacent to the cover 120 of the rigid structure 102 when in the open configuration.

In an embodiment, the vapor barrier 114 can define one or more seams, pleats, folds, or other shaped portions adapted to permit close fit contact between the vapor barrier 114 and the transportable element, such as one or more electrochromic preforms.

The system 100 further includes a reference tool 124 adapted to align at least one of the transportable elements adapted to be stored within the system 100. In certain instances, the reference tool 124 can be adapted to guide a machine transporting the transportable elements. In a more particular instance, the reference tool 124 can be adapted to guide the transportable elements and align them with respect to the internal volume 116. In yet a more particular instance, the reference tool 124 can be adapted to permit autonomous alignment of the transportable elements with respect to the system 100.

In an embodiment, the reference tool 124 can include a picture frame disposed along or adjacent to one or more sidewalls 106 of the system 100. In a particular embodiment, the reference tool 124 can include a generally polygonal structure, a generally arcuate structure, or a structure having arcuate and polygonal sections. In a particular instance, the reference tool 124 can include a color, texture, indicia, feature, or any combination thereof adapted to be recognized by a detection element, such as a sensor, on a machine transporting the transportable elements, such as electrochromic preforms, to the system 100. The reference tool 124 can be coupled with one or more sidewalls 106 of the system 100. In a particular instance, the reference tool 124 can be coupled along an interior surface of the sidewalls 106. In a more particular instance, the reference tool 124 can be disposed within the compartment 104 of the rigid structure 102. In an embodiment, the reference tool 124 is disposed within the interior volume 116 of the vapor barrier 114. In another embodiment, the reference tool 124 is disposed between the vapor barrier 114 and at least a portion of the rigid structure 102.

In an embodiment, the reference tool 124 is disposed along a best fit plane adapted to be parallel, or generally parallel, with a best fit plane of at least one of the transportable elements when properly oriented and contained within the internal volume 116. In a more particular embodiment, the reference tool 124 can lie along a best fit plane adapted to be parallel, or generally parallel, with a best fit plane of at least one of the electrochromic preforms adapted to be transported by the system 100.

Referring to FIG. 2, the system 100 is adapted to receive a plurality of electrochromic preforms 202. As used herein, electrochromic preforms 202 include portions of electrochromic devices. More particularly, electrochromic preforms can include nonfunctional portions of electrochromic devices. Yet more particularly, electrochromic preforms can include portions of electrochromic devices devoid of bus bars or other hardware or elements necessary for proper utilization of the electrochromic device.

The system 100 is adapted to transport electrochromic preforms from a first location to a second location. Typically, transportation of electrochromic devices is performed only after the electrochromic device is fully manufactured (i.e., after the electrochromic device is operable). Transportation of electrochromic preforms is difficult given the sensitive nature of unfinished depositions, layers, and elements. Systems 100 in accordance with embodiments described herein can mitigate difficulties associated with sensitive elements of the electrochromic preform.

In an embodiment, the system 100 can be adapted to receive at least 2 electrochromic preforms, at least 5 electrochromic preforms, at least 10 electrochromic preforms, at least 25 electrochromic preforms, or at least 50 electrochromic preforms. In another embodiment, the system 100 can be adapted to receive no greater than 200 electrochromic preforms, no greater than 150 electrochromic preforms, no greater than 100 electrochromic preforms, or no greater than 75 electrochromic preforms.

The plurality of electrochromic preforms 202 can be stacked relative to one another such that best fit planes of each of the plurality of electrochromic preforms 202 extend parallel, or generally parallel, with respect to one another. In an embodiment, moving the electrochromic preforms 202 into the internal volume 116 can be performed in a direction normal, or generally normal, with a best fit plane of the electrochromic preforms 202. For example, referring again to FIG. 1, the electrochromic preforms 202 can be moved in a direction toward the reference tool 124. After an initial electrochromic preform 202 is in position within the internal volume 116, a subsequent electrochromic preform 202 can be introduced in a similar manner. The subsequent electrochromic preform 202 can be aligned with the reference tool 124, the initial electrochromic preform 202, another intermediary electrochromic preform 202 disposed between the initial electrochromic preform 202 and the subsequent electrochromic preform 202, or any combination thereof.

In an embodiment, at least two sets of electrochromic preforms can be equally spaced apart from one another. In another embodiment, at least one electrochromic preform 202 can be spaced apart from the system 100 by a different distance as compared to a spacing between adjacent electrochromic preforms 202. For instance, in an embodiment, the electrochromic preforms 202 can include a first electrochromic preform, a third electrochromic preform, and a second electrochromic preform disposed between the first and third electrochromic preforms. A nearest distance between the first electrochromic preform and the system 100 (e.g., the reference tool 124 or sidewall 106) can be different than a distance between the second and third electrochromic preforms. In a particular embodiment, the distance between the first electrochromic preform 202 and the system 100 can be less than the distance between adjacent electrochromic preforms. In another particular embodiment, the distance between the first electrochromic preform 202 and the system 100 can be greater than the distance between adjacent electrochromic preforms 202.

In an embodiment, at least one of the electrochromic preforms 202 is adapted to be contacted along an edge 204 thereof. In a more particular embodiment, at least one of the electrochromic preforms 202 is adapted to contact only along the edge 204. That is, for example, a middle portion 206 of the electrochromic preform 202 can be spaced apart from any other electrochromic preform 202 or other portion of the system 100. The electrochromic preforms 202 can be coupled with one or more components 208 disposed around the edge 204 thereof. In a particular embodiment, the one or more components 208 includes a plurality of components 208 adapted to contact each of the electrochromic preforms, such as at least two components, at least three components, at least four components, at least five components, at least six components, at least eight components, at least ten components, at least twenty components, or at least fifty components. In another embodiment, the plurality of components can include no greater than 500 components, no greater than 250 components, or no greater than 100 components. In an embodiment, the components can be spaced apart from one another. In a more particular embodiment, the components can be equally spaced apart from one another. In an embodiment, the components 208 can be positioned at same positions along the edges 204 of at least two of the electrochromic preforms 202. That is, for example, at least two of the electrochromic preforms 202 can have components 208 disposed at same, or generally same, locations therealong. In such a manner, the components 208 can be positioned adjacent to one another when the plurality of electrochromic preforms are disposed within the internal volume 116.

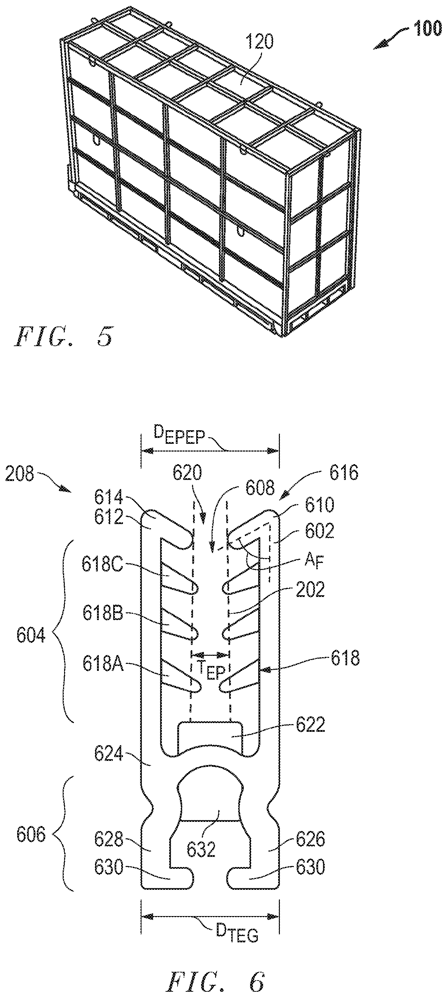

Referring to FIG. 6, the components 208 include a body 602 defining an electrochromic preform engagement portion 604 adapted to engage with the electrochromic preform 202 and a tool engagement portion 606. The electrochromic preform engagement portion 604 is pivotally coupled with the tool engagement portion 606. The tool engagement portion 606 is adapted to receive a biasing force from an operator, a tool, or a combination thereof, to decrease a dimension, D_{TEG}, of the tool engagement portion 606. Decreasing the dimension, D_{TEG}, of the tool engagement portion 606 increases a corresponding dimension, D_{EPEP}, of the electrochromic preform engagement portion 604. In an embodiment, D_{TEG} and D_{EPEP} are parallel, or generally parallel, with one another. In a more particular embodiment, D_{TEG} and D_{EPEP} define widths of the component 208. In an embodiment, D_{TEG} and D_{EPEP} are uniform, or generally uniform, along a majority, such as an entire, length of the component 208.

The electrochromic preform engagement portion 604 includes a receiving area 608 disposed between a first sidewall 610 and a second sidewall 612. The receiving area 608 is adapted to receive at least one of the electrochromic preforms 202. In a more particular embodiment, the receiving area 608 is adapted to receive one of the electrochromic preforms 202. In certain instances, the dimension, D_{EPEP}, of the electrochromic preform engagement portion 604 can be greater than a thickness, T_{EP}, of the electrochromic preform 202, as measured prior to engagement with the electrochromic preform 202.

In an embodiment, at least one of the first and second sidewalls 610 and 612 of the electrochromic preform engagement portion 604 can include a flange 614 disposed at or adjacent to a distal end 616 of the component 208. In a particular embodiment, the first and second sidewalls 610 and 612 can both include a flange 614 disposed at or adjacent to the distal end 616.

In an embodiment, the flange 614 of the first sidewall 610 can extend radially inward. In a more particular embodiment, the flange 614 can be canted relative to the first sidewall 610. In a more particular embodiment, the flange 614 can be canted away from an opening 620 of the receiving area 608. For example, in an embodiment, the flange 614 can be disposed along a best fit line disposed at an angle, A_{F}, as measured with respect to the first sidewall 610, less than 90°, less than 85°, less than 80°, less than 75°, less than 70°, less than 65°, or less than 60°. In another embodiment, the angle, A_{F}, can be no less than 10°, no less than 15°, no less than 20°, no less than 25°, or no less than 30°.

In an embodiment, the flange 614 can be adapted to guide the electrochromic preform into the receiving area 208. In an embodiment, the flange 614 can include a rounded end, a tapered end, or any combination thereof.

The electrochromic preform engagement portion 604 includes a plurality of projections 618 extending into the receiving area 608. In an embodiment, at least one of the plurality of projections 618 can extend from the first sidewall 610 and at least one of the plurality of projections 618 can extend from the second sidewall 612. In a particular embodiment, the first and second sidewalls 610 and 612 can include different numbers of projections 618 as compared to one another. In another particular embodiment, the first and second sidewalls 610 and 612 can include a same number of projections 618 as compared to one another. In a particular instance, the projections 618 can be similarly positioned along the first and second sidewalls 610.

In an embodiment, at least one of the plurality of projections 618 can be canted relative to the first or second sidewall 610 or 612. In a more particular embodiment, at least one of the projections, such as a first set of projections 618A, a second set of projections 618B, a third set of projections 618C, or any combination thereof, can be canted away from the opening 620 of the receiving area 608.

In an embodiment, at least one of the plurality of projections 618 can be disposed at an angle, A_{P}, as measured by an angle of a best fit line with respect to the fist sidewall 610, less than 90°, less than 85°, less than 80°, less than 75°, less than 70°, less than 65°, or less than 60°. In another embodiment, the angle, A_{P}, can be no less than 10°, no less than 15°, no less than 20°, no less than 25°, or no less than 30°. In an embodiment, A_{P} is in a range of 1° and 89°, in a range of 5° and 88°, in a range of 20° and 85°, or in a range of 60° and 80°.

In an embodiment, the angle, A_{P}, of the projection 618 can be different than the angle, A_{F}, of the flange 614. In a particular embodiment, A_{P} can be less than A_{F}. In another particular embodiment, A_{F} can be less than A_{P}. In yet another embodiment, the angle, A_{P}, of the projection 618 can be the same, or generally the same as the angle, A_{F}, of the flange 614.

In an embodiment, all of the plurality of projections 618 can be disposed at the angle, A_{P}, where A_{P} is less than 90°, less than 85°, less than 80°, less than 75°, less than 70°, less than 65°, or less than 60°. In another embodiment, the angle, A_{P}, can be no less than 10°, no less than 15°, no less than 20°, no less than 25°, or no less than 30°.

In an embodiment, at least two of the plurality of projections 618 can extend the same distance into the receiving area 608, as measured from the first or second sidewalls 610 or 612 when the component 208 is not coupled with an electrochromic preform 202. In another embodiment, at least two sets of projections (e.g., sets of projections 618A, 618B, and 618C) can extend the same distance into the receiving area 608. In a more particular embodiment, all of the plurality of projections 618 can extend the same distance into the receiving area 608.

In another embodiment, at least two of the plurality of projections 618 can extend different distances into the receiving area 608. In another embodiment, at least two sets of projections (e.g., sets of projections 618A, 618B, and 618C) can extend different distances into the receiving area 608. In a more particular embodiment, all of the plurality of projections 618 can extend different distances into the receiving area 608.

In an embodiment, the flange 614 on the first sidewall 610 can extend a distance, D_{F}, into the receiving area 608 and at least one of the projections 618 can extend a distance, D_{P}, into the receiving area 608. In a particular embodiment, D_{F} can be in a range of 0.1 D_{P} and 2.0 D_{P}, in a range of 0.5 D_{P} and 1.25 D_{P}, in a range of 0.75 D_{P} and 1.1 D_{P}, or in a range of 0.9 D_{P} and 1.05 D_{P}.

In an embodiment, at least one of the projections 618 can have a tapered cross-sectional profile. For instance, the at least one projection 618 can define a first thickness, as measured adjacent to the first or second sidewall 610 or 612, and a second thickness, as measured at a location spaced apart from the first or second sidewall 610 or 612, different than the first thickness. In a more particular embodiment, the first thickness can be greater than the second thickness. In a particular instance, the at least one projection 618 can define a linear (e.g., constant) taper. In another instance, the at least one projection 618 can define a non-constant taper.

In certain instances, at least one of the projections 618 can include a deformable material, such as an elastomer, adapted to deform upon insertion of the electrochromic preform 202 into the receiving area 608. In an embodiment, at least one of the projections 618 can include, for example, ethylene propylene diene monomer (EPDM), silicone, butyl, isoprene, styrene-butadiene (SBR), butadiene, isobutylene, fluorocarbon, fluoroelastomer (FKM), natural rubber, butyl rubber, isobutylene isoprene rubber (IIR), acrylonitrile butadiene rubber (NBR), chloroprene rubber (CR), chlorosulfonated polyethylene (CSM), or any combination thereof. In another embodiment, at least one of the projections 618 can include a nylon, a polyether ether ketone (PEEK), polyether sulfone (PES), polytetrafluoroethylene (PTFE), polyimide, or an organic or inorganic composite. Further exemplary polymers include fluorinated ethylene-propylene (FEP), polyvinylidenfluoride (PVDF), polychlorotrifluoroethylene (PCTFE), ethylene chlorotrifluoroethylene (ECTFE), perfluoroalkoxy alkane (PFA), polyacetal, polybutylene terephthalate (PBT), polyethylene terephthalate (PET), polyimide (PI), polyetherimide, polyethylene (PE), polysulfone, polyamide (PA), polyphenylene oxide, polyphenylene sulfide (PPS), polyurethane, polyester, liquid crystal polymers (LCP), or any combination thereof.

In certain instances, at least one of the projections 618 can include a filler. Exemplary fillers include glass fibers, carbon fibers, silicon, PEEK, aromatic polyester, carbon particles, bronze, fluoropolymers, thermoplastic fillers, aluminum oxide, polyamidimide (PAI), PPS, polyphenylene sulfone (PPSO2), LCP, aromatic polyesters, molybdenum disulfide, tungsten disulfide, graphite, grapheme, expanded graphite, boron nitrade, talc, calcium fluoride, or any combination thereof. Additionally, the filler can include alumina, silica, titanium dioxide, calcium fluoride, boron nitride, mica, Wollastonite, silicon carbide, silicon nitride, zirconia, carbon black, pigments, or any combination thereof.

In an embodiment, installation of the component 208 with respect to the electrochromic preform 202 can be performed by translating at least one of the component 208 and electrochromic preform 202 toward one another. The electrochromic preform 202 can pass through the opening 620 of the component 208 into the receiving area 608. In a particular embodiment, the electrochromic preform 202 can be guided into the receiving area by one or both of the flanges 610 and 612. Upon contacting and biasing against an edge set of projections (e.g., projections 618C), the electrochromic preform 202 can deform the projections 618, such as bend at least one of the projections 618, compress at least one of the projections 618, or both. In certain instances, at least one of the sidewalls 610 and 612 can deform outward as the electrochromic preform is inserted into the receiving area 608. In a more particular instance, both of the sidewalls 610 and 612 can deform outward as the electrochromic preform is inserted into the receiving area 608.

In an embodiment, an installation force between the electrochromic preform 202 and component 208 can increase as the electrochromic preform engages with more of the projections 618 (e.g., as the electrochromic preform 202 is inserted further into the receiving area 608). In an embodiment, an engagement force required to install the component 208 relative to the electrochromic preform 202 can be different than a disengagement force required to detach the component 208 from the electrochromic preform 202. In a more particular embodiment, the engagement force can be less than the disengagement force. For instance, the engagement force can be no greater than 0.99 times the disengagement force, no greater than 0.98 times the disengagement force, no greater than 0.97 times the disengagement force, no greater than 0.96 times the disengagement force, no greater than 0.95 times the disengagement force, or no greater than 0.9 times the disengagement force.

The component 208 further includes a stop feature 622 adapted to prevent over insertion of the electrochromic preform 202 into the receiving area 608. The stop feature 622 is disposed within the receiving area 608, at a proximal end of the receiving area 608 adjacent to the tool engagement portion 606, adjacent to a pivot point 624 between the electrochromic preform engagement portion 604 and the tool engagement portion 606.

In an embodiment, the stop feature 622 can include a material having a Shore A hardness less than the body 602 of the component 208. In a more particular embodiment, the stop feature 622 can include a deformable material, such as an elastomer. The stop feature 622 can include, for instance, any one or more of the polymers described with respect to the projections 618. For example, the stop feature 622 can include ethylene propylene diene monomer (EPDM), silicone, butyl, isoprene, styrene-butadiene (SBR), butadiene, isobutylene, fluorocarbon, fluoroelastomer (FKM), natural rubber, butyl rubber, isobutylene isoprene rubber (IIR), acrylonitrile butadiene rubber (NBR), chloroprene rubber (CR), chlorosulfonated polyethylene (CSM), or any combination thereof. In an embodiment, the stop feature 622 can include a filler, such as glass fibers, carbon fibers, silicon, PEEK, aromatic polyester, carbon particles, bronze, fluoropolymers, thermoplastic fillers, aluminum oxide, polyamidimide (PAI), PPS, polyphenylene sulfone (PPSO2), LCP, aromatic polyesters, molybdenum disulfide, tungsten disulfide, graphite, grapheme, expanded graphite, boron nitrade, talc, calcium fluoride, or any combination thereof. Additionally, the filler can include alumina, silica, titanium dioxide, calcium fluoride, boron nitride, mica, Wollastonite, silicon carbide, silicon nitride, zirconia, carbon black, pigments, or any combination thereof. In certain instances, the stop feature 622 and at least one of the projections 618 can have a same material composition. In another embodiment, the stop feature 622 and at least one of the projections 618 can have different material compositions as compared to one another.

The tool engagement portion 606 includes a first biasing surface 626 and a second biasing surface 628. The first and second biasing surfaces 626 and 628 can be adapted to engage with a tool (not illustrated) adapted to bias the biasing surfaces 626 and 628 relative to one another, such as compress the biasing surfaces 626 and 628 together. As illustrated, in an embodiment, the first and second biasing surfaces 626 and 628 can extend from the pivot point 624 in directions generally parallel with respect to one another.

In an embodiment, at least one of the biasing surfaces 626 and 628 can include a flange 630 disposed adjacent to a distal end of the at least one biasing surface 626 or 628. In a particular embodiment, at least one of the flanges 630 can extend along a best fit line normal with the at least one of the first and second biasing surfaces 626 or 628. In an embodiment, the component 208 can include a flange 630 disposed on the first biasing surface 626 and a flange 630 disposed on the second biasing surface 628. In a particular instance, the flanges 630 and 630 can extend inward, toward one another. In another embodiment, at least one of the flanges 630 or 630 can extend outward, away from the other flange 630.

The tool engagement portion 606 further includes a deformable element 632 disposed between the first and second biasing surfaces 626 and 628. The deformable element 632 is disposed adjacent to the pivot point 624. The deformable element 632 is disposed at, or adjacent, to a proximal end of the tool engagement portion 606. The stop feature 622 and deformable element 632 are spaced apart by a portion of the body 602 corresponding with the pivot point 624.

In an embodiment, the deformable element 632 can be adapted to bias the first and second biasing surfaces 626 and 628 apart from one another. In a more particular embodiment, the deformable element 632 can be adapted to increase a biasing force required to compress the first and second biasing surfaces 626 and 628 together. In an embodiment, the deformable element 632 comprises a deformable material. In a more particular embodiment, the deformable element 632 can include a material described with respect to the stop feature 622. For example, the deformable element 632 can include ethylene propylene diene monomer (EPDM), silicone, butyl, isoprene, styrene-butadiene (SBR), butadiene, isobutylene, fluorocarbon, fluoroelastomer (FKM), natural rubber, butyl rubber, isobutylene isoprene rubber (IIR), acrylonitrile butadiene rubber (NBR), chloroprene rubber (CR), chlorosulfonated polyethylene (CSM), or any combination thereof.

In certain instances, the tool engagement portion 606 can be shaped to receive an operating portion of a tool (not illustrated) adapted to bias the tool engagement portion 606 to affect the relative dimensions of the electrochromic preform engagement portion 604. For instance, the tool engagement portion 606 can have a shape adapted to receive or secure relative to biasing fingers of the tool.

In an embodiment, the electrochromic preform engagement portion 604 can extend a different distance from the pivot point 624 than the tool engagement portion 606. In a more particular embodiment, in a particular embodiment, the electrochromic preform engagement portion 604 can extend a greater distance from the pivot point 624 than the tool engagement portion 606. For instance, the electrochromic preform engagement portion 604 can extend at least 1.1 times further from the pivot point 624 than the tool engagement portion 606, at least 1.2 times further from the pivot point 624 than the tool engagement portion 606, at least 1.3 times further from the pivot point 624 than the tool engagement portion 606, at least 1.4 times further from the pivot point 624 than the tool engagement portion 606, at least 1.5 times further from the pivot point 624 than the tool engagement portion 606, or at least 2 times further from the pivot point 624 than the tool engagement portion 606. In another instance, the electrochromic preform engagement portion 604 can extend no greater than 10 times further from the pivot point 624 than the tool engagement portion 606, no greater than 8 times further from the pivot point 624 than the tool engagement portion 606, no greater than 6 times further from the pivot point 624 than the tool engagement portion 606, or no greater than 4 times further from the pivot point 624 than the tool engagement portion 606.

In an embodiment, at least one of the electrochromic preform engagement portion 604 and tool engagement portion 606 can be reflectively symmetrical. In a more particular embodiment, both the electrochromic preform engagement portion 604 and the tool engagement portion 606 can be reflectively symmetrical.

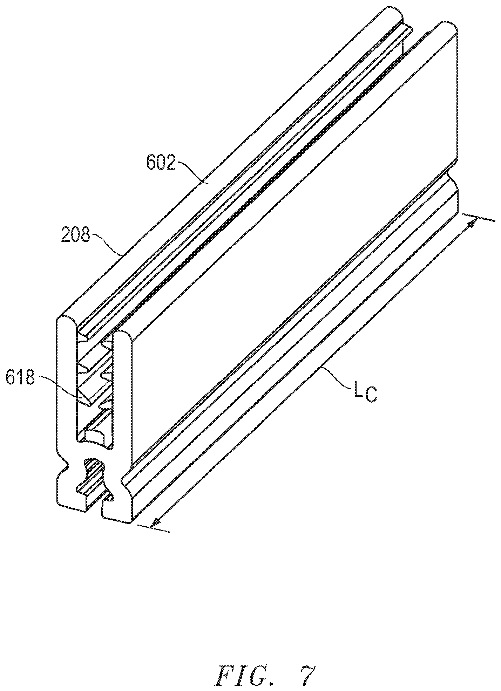

Referring to FIG. 7, in an embodiment, the component 208 can have a uniform, or generally uniform, composition, shape, size, or any combination thereof, as measured along the entire length of the component 208. In a particular embodiment, the component 208 can have a length, L_{C}, less than an edge length, L_{E}, of the electrochromic preform 202. Thus, for example, the component 208 can be adapted to be positioned along a portion of an edge of the electrochromic preform 202. In an embodiment, the electrochromic preform 202 can be adapted to receive a plurality of components 208. In a more particular embodiment, the electrochromic preform 202 can be adapted to receive a plurality of components 208 along each edge thereof.

In certain instances, the component 208 can include an extruded body 602. In an embodiment, the body 602 comprises a resilient material. For example, the body 602 can include a material having a Shore A durometer greater than the projections 618. Exemplary materials include high-density polyethylene (HDPE), polypropylene (PP), polyvinyl chloride (PVC), polystyrene (PS), nylon, polytetrafluoroethylene (PTFE), polyurethane (PU), and combinations thereof. In a particular embodiment, the body 602 comprises polypropylene.

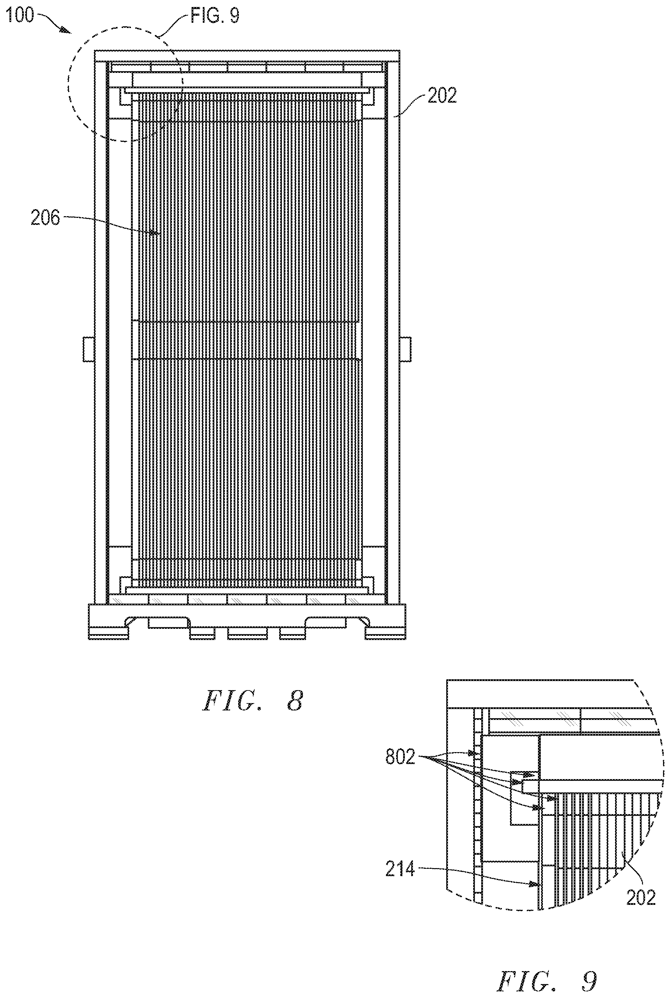

In an embodiment, the electrochromic preforms 202 are adapted to be equally spaced apart within the compartment 206 of the rigid system 202. Referring to FIG. 8, the electrochromic preforms 202 can be adapted to be oriented in a same direction when disposed in the compartment 206. In a more particular embodiment, the electrochromic preforms 202 can be disposed at same relative positions as compared to one another within the compartment 206, with adjacent electrochromic preforms 202 translated apart from one another in a direction normal to the major surfaces thereof. In such a manner, the edges of the electrochromic preforms 202 can be aligned with one another, such as aligned along a plane perpendicular to a major surface of the electrochromic preforms 202. Further, major surfaces of the electrochromic preforms 202 can be oriented parallel with respect to one another.

Prior to sealing the vapor barrier 214 (performed prior to the embodiment illustrated in FIG. 3), one or more pads 802 can be installed relative to the electrochromic preforms 202 to dampen vibration or prevent relative movement within the compartment 206. Referring to FIG. 9, the one or more pads 802 can include pads 802 disposed outside of the vapor barrier 214, inside the vapor barrier 214, or a combination thereof. Pads 802 disposed within the vapor barrier 214 can be positioned prior to sealing the vapor barrier 214. Internal pads (i.e., pads 802 within the vapor barrier 214) can be disposed, for example, between adjacent electrochromic preforms 202, along edges of at least one of the electrochromic preforms 202, or along a major surface of an outer electrochromic preform 202. In an embodiment, the pads 802 can include a same material as the one or more pads 110 previously described. In another embodiment, the pads 802 can include a different material as compared to the one or more pads 110. In an embodiment, at least one of the pads 802 can be coupled with the rigid structure 102, such as along sidewalls 106, such that the at least one pad 802 remains in contact with the rigid structure 102 when electrochromic preforms 202 are absent from the system 100.

In an embodiment, the electrochromic preforms 202 can be pressure loaded by the system 100. That is, for example, the system 100 can include one or more components (such as the pads 110 and 802) adapted to compress and support the electrochromic preforms 202 to further mitigate motion thereof, particularly during transit. In an embodiment, the internal volume 116, V_{MIN}, of the vapor barrier 214, as measured when the vapor barrier 214 is in close fit communication with the compartment 106 of the rigid structure 102 in an unbiased condition, can be different than the internal volume, V_{EP}, when the internal volume 116 is full of electrochromic preforms 202. In a more particular embodiment, V_{MIN} can be less than V_{EP}. For instance, V_{MIN} can be less than 0.99 V_{EP}, less than 0.98 V_{EP}, less than 0.97 V_{EP}, less than 0.96 V_{EP}, less than 0.95 V_{EP}, less than 0.94 V_{EP}, less than 0.93 V_{EP}, less than 0.92 V_{EP}, less than 0.91 V_{EP}, or less than 0.9 V_{EP}. In another embodiment, V_{MIN} can be less than 0.85 V_{EP}, less than 0.8 V_{EP}, less than 0.75 V_{EP}, less than 0.7 V_{EP}, less than 0.65 V_{EP}, less than 0.6 V_{EP}, less than 0.55 V_{EP}, or less than 0.5 V_{EP}. In yet another embodiment, V_{MIN} can be no less than 0.1 V_{EP}, no less than 0.2 V_{EP}, no less than 0.3 V_{EP}, or no less than 0.4 V_{EP}.

A desiccant (not illustrated) can be included in the system 100, such as within the internal volume 116 of the vapor barrier 214. The desiccant can include a hygroscopic substance adapted to induce or sustain a state of dryness within the internal volume 116. In an embodiment, the desiccant can be chemically inert. In another embodiment, the desiccant can include, for instance, a silica, a charcoal, an activated charcoal, calcium sulfate, calcium chloride, molecular sieves, or any combination thereof. In an embodiment, the desiccant can be inserted into the internal volume 116 prior to sealing the vapor barrier 214. In an embodiment, the desiccant can include a plurality of desiccant containing bodies disposed around the internal volume 116, such as within different areas of the internal volume 116.

FIG. 3 illustrates the system 100 after sealing the vapor barrier 214 and installing a first portion 122A of a sidewall 106 of the rigid structure 102. FIG. 4 illustrates the system 100 with a plurality of pads 110 disposed along an upper surface of the system 100. In an embodiment, the pads 110 are installed opposite the one or more pads 110 described with respect to FIG. 1. In an embodiment, the pads 110 are the same, or generally the same, as the one or more pads 110 previously described. In another embodiment, the pads 110 are different than the one or more pads 110 previously described in at least one of size, shape, composition, and spatial arrangement relative to the electrochromic preforms 202. FIG. 5 illustrates the system 100 after securing the cover 120. One or more ties, bands, or compression elements (not illustrated) can be wrapped around the system 100 or any portion thereof.

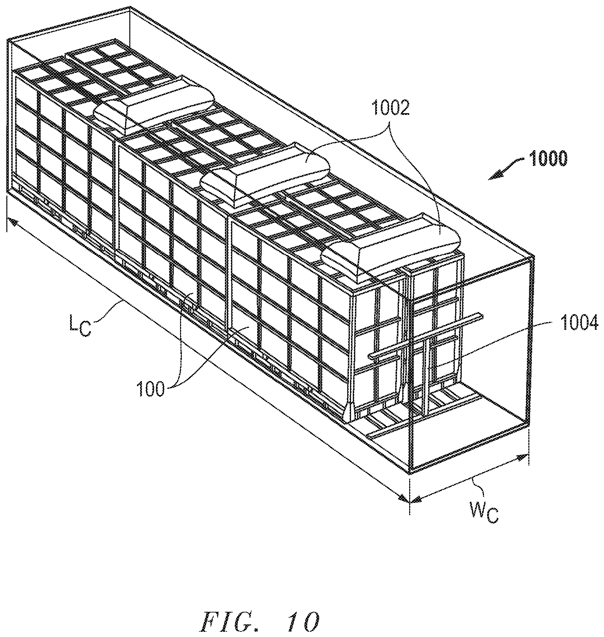

As illustrated in FIG. 5, the system 100 is ready for transport. For example, the system 100 can be transported to a second location where the electrochromic preforms 202 can be further operated on, such as customized on-site or at a local facility for particular window installation. In certain instances, the system 100 can be adapted to be transported by rail, car, plane, or boat. In an embodiment, a plurality of systems 100 can be adapted to fit within a container, such as the container 1000 illustrated in FIG. 10. In the illustrated embodiment, the container 1000 can be adapted to receive a plurality of systems 100 each containing a plurality of electrochromic preforms 202. In an embodiment, the container 1000 can be adapted to receive at least two systems 100, at least three systems 100, at least four system 100, at least five systems 100, or at least six systems 100. In another embodiment, the container 1000 can be adapted to receive no greater than 20 systems 100, no greater than 10 systems 100, or no greater than 8 systems 100.

In an embodiment, the container 1000 can have a width, W_{C}, greater than a width, W_{S}, of the system 100 to be received therein. In a particular embodiment, W_{C} can be at least 1.01 W_{S}. In a more particular embodiment, W_{C} can be in a range between 1.9 W_{S} and 4 W_{S}, in a range of 1.95 W_{S} and 2.5 W_{S}, or in a range of 1.99 W_{S} and 2.25 W_{S}. In a particular instance, W_{C} can be approximately equal to 2 W_{S}. In such a manner, the container 1000 can be adapted to contain at least two systems 100 disposed next to one another in a width direction of the container 1000.

In an embodiment, the container 1000 can have a length, L_{C}, greater than a length, L_{S}, of the system 100 to be received therein. In a particular embodiment, L_{C} can be at least 1.01 L_{S}. In a particular embodiment, L_{C} can be in a range between 1.01 L_{S} and 10 L_{S}, in a range of 1.5 L_{S} and 5 L_{S}, or in a range of 2 L_{S} and 4 Ls. In such a manner, the container 1000 can be adapted to contain at least two systems next to one another in a length direction of the container 1000.

In an embodiment, the container 1000 can have a height, H_{C}, greater than a height, H_{S}, of the system 100 to be received therein. In a particular embodiment, H_{C} can be at least 1.01 H_{S}. In a particular embodiment, H_{C} can be in a range between 1.01 Hs and 10 Hs, in a range of 1.1 Hs and 2 Hs, or in a range of 1.3 H_{S} and 1.75 H_{S}.

In an embodiment, a plurality of systems 100 can be loaded into the container 1000. In a particular embodiment, the plurality of systems 100 can be secured by ties, stays, or other means to prevent relative movement within the container 1000. In another embodiment, the plurality of systems 100 can be loaded into the container 1000 in a close-fit therewith to avoid movement due to compression or close fit arrangement. In an embodiment, the systems 100 are disposed within the container 1000 such that they dampen vibration and movement within the container 1000. For instance, the loaded container 1000 can have a reduced resonance frequency as compared to an unloaded container or a partially loaded container. In certain instances, the loaded container 1000 can incur a reduced maximum G force on the electrochromic preforms 202, thereby further reducing the possibility of damage during shipping.

In certain instances, one or more expandable objects 1002, such as inflatable bags, can be positioned between adjacent systems 100 and 100, systems 100 and the container 1000, or both. In a particular embodiment, the expandable objects 1002 can include dunnage bags. The expandable objects 1002 can be positioned within the container 1000 after the systems 100 are disposed therein. In an embodiment, the systems 100 can be supported by an internal framework 1004 disposed within the container 1000. In a particular instance, the framework 1004 can be secured to the container 1000. In another instance, the framework 1004 can float relative to the container 1000 (e.g., the framework 1004 can be unsecured to the container 1000). In a particular embodiment, the framework 1004 can include portions disposed between adjacent systems 100.

In certain instances, the container 1000 can be used for shipping systems 100 from a first location to a second location, such as from a first fabrication plant to a second fabrication plant. When shipping from the first location to the second location, the container 1000 can be loaded with systems 100 containing electrochromic preforms 202 which can be offloaded at the second location.

Upon arrival, the systems 100 can be removed from the container 1000, the rigid structure 102 can be opened, and the vapor barrier 214 can be opened to expose the electrochromic preforms 202. In an embodiment, opening the system 100, such as opening the vapor barrier 214, can be performed in a clean environment. In a more particular embodiment, opening the vapor barrier 214 can be performed in a room having a particle count less than the ambient environment, such as a clean room, or a semi-clean room.

In an embodiment, electrochromic preforms 202 can be removed from the system 100 in a manner opposite their insertion therein. For instance, the last electrochromic preform 202 to be loaded into the system 100 can be removed first and the first electrochromic preform 202 loaded into the system 100 can be removed last. After removing the electrochromic preforms 202, the system 100 can be reused, such as broken down for shipping and sent to the original location to receive a plurality of new electrochromic preforms 202.

In an embodiment, the container 1000 can be returned to the first location to receive systems 100 with additional electrochromic preforms 202. In certain instances, the systems 100 can be included in the return shipment from the second location to the first location. In an embodiment, at least one of the systems 100 can be empty during the return shipment. In a more particular embodiment, all of the systems 100 can be empty during the return shipment. In certain instances, at least one of the systems 100 can be at least partially disassembled for the return shipment to permit additional space within the container 1000. In a more particular embodiment, all of the systems 100 can be at least partially disassembled for the return shipment.

Note that not all of the activities described above in the general description or the examples are required, that a portion of a specific activity may not be required, and that one or more further activities may be performed in addition to those described. Still further, the order in which activities are listed is not necessarily the order in which they are performed.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

The specification and illustrations of the embodiments described herein are intended to provide a general understanding of the structure of the various embodiments. The specification and illustrations are not intended to serve as an exhaustive and comprehensive description of all of the elements and features of apparatus and systems that use the structures or methods described herein. Separate embodiments may also be provided in combination in a single embodiment, and conversely, various features that are, for brevity, described in the context of a single embodiment, may also be provided separately or in any subcombination. Further, reference to values stated in ranges includes each and every value within that range. Many other embodiments may be apparent to skilled artisans only after reading this specification. Other embodiments may be used and derived from the disclosure, such that a structural substitution, logical substitution, or another change may be made without departing from the scope of the disclosure. Accordingly, the disclosure is to be regarded as illustrative rather than restrictive, the invention being defined by the appended claims.

## Claims

1. A component (208) adapted to couple with an edge (204) of an electrochromic preform (202) comprising:
a body (602) defining an electrochromic preform engagement portion (604) and a tool engagement portion (606) pivotally coupled with the electrochromic preform engagement portion (604),
wherein reducing a dimension of the tool engagement portion (606) increases a corresponding dimension in the electrochromic preform engagement portion (604),
wherein the electrochromic preform engagement portion (604) comprises a receiving area (608) adapted to receive the electrochromic preform (202), and a plurality of projections (618) extending into the receiving area (608),
**characterised in that**
the receiving area (608) comprises a stop feature (622) adapted to prevent over insertion of the electrochromic preform (202) into the receiving area (608),
wherein the tool engagement portion (606) includes a first biasing surface (626), a second biasing surface (628) and a deformable element (632) disposed between the first and second biasing surfaces (626, 628), and
wherein the stop feature (622) and the deformable element (632) are spaced apart by a portion of the body (602) corresponding with a pivot point (624) between the electrochromic preform engagement portion (604) and the tool engagement portion (606).

2. The component (208) of claim 1, wherein at least one of the projections (618) lies along a best fit line disposed at an angle, as measured with respect to a sidewall (610, 612) of the component (208), in a range of 1° and 89°.

3. The component (208) of claim 1, wherein at least two projections (618) of the plurality of projections (618) extend different distances from the sidewall (610, 612) of the component (208) into the receiving area (608).

4. The component (208) of claim 1, wherein the stop feature (622) comprises a deformable material, such as an elastomer.

5. The component (208) of claim 4, wherein the electrochromic preform engagement portion (604) comprises a first sidewall (610) and a second sidewall (612) spaced apart from one another by the receiving area (608) and wherein at least one of the sidewalls (610, 612) comprises a flange (614) adjacent to a distal end of the at least one sidewall (610, 612) and wherein the flange (614) extends a distance, D_{F}, as measured from the sidewall (610, 612), wherein at least one of the projections (618) extends a distance, D_{P}, and wherein D_{F} is in a range of 0.1 D_{P} and 2.0 D_{P}.

6. A system (100) for containing electrochromic preforms (202) comprising:
a rigid structure (102) defining a compartment (104); and
a vapor barrier (114) disposed within the compartment (104) and adapted to define a selectively sealable internal volume (116),
wherein a plurality of electrochromic preforms (202) are receivable in the internal volume (116), and wherein the internal volume (116) defines a reference tool (124) for aligning at least one of the plurality of electrochromic preforms (202),
wherein the system (100) further comprises at least one component (208) of any one of the preceding claims.

7. The system (100) of claim 6, wherein the rigid structure (102) comprises a multi-piece rigid structure including at least 6 sidewalls (106).

8. The system (100) of claim 7, wherein the vapor barrier (114) defines: a wall thickness in a range of 0.0254 mm and 2.54 mm (1 mil and 100 mil), as measured according to ASTM D2103, or a tensile strength of at least 1.75 N/mm (10 lbs/in), as measured according to ASTM D882.

9. The system (100) of claim 6, wherein the vapor barrier (114) comprises an oxygen transmission rate (OTR) in a range of 0.645 cm³/m²/24h (0.0001 cc/100in²/day) and 6.45 cm³/m²/24h (0.001 cc/100in²/day), as measured according to ASTM D3985 or a water vapor transmission rate (WVTR) in a range of 0.645 cm³/m²/24h (0.0001 cc/100in²/day) and 6.45 cm³/m²/24h (0.001 cc/100in²/day), as measured according to ASTM F1249.

10. The system (100) of any one of claims 7 to 9, wherein the vapor barrier (114) is adapted to be selectively sealable upon application of a temperature of at least 204.4°C (400°F), a pressure of at least 0.28 MPa (40 PSI), for a time of at least 1 second.

11. The system (100) of claim 6, wherein, in a closed, unbiased state the internal volume (116) has a volume, V_{MIN}, less than a volume, V_{EP}, of the internal volume when full of electrochromic preforms (202) and wherein V_{MIN} is less than 0.99 V_{EP} and no less than 0.25 V_{EP}.

12. The system (100) of claim 6, wherein the system (100) is adapted to receive:
a first electrochromic preform (202) adjacent to the reference tool (124),
a third electrochromic preform (202), and
a second electrochromic preform (202) disposed between the first and third electrochromic preforms (202),
wherein a nearest distance between the first electrochromic preform (202) and the system (100) is different than a distance between the second and third electrochromic preforms (202).

13. A method of transporting an electrochromic preform (202) comprising:
at a first location, moving the electrochromic preform (202) toward a selectively sealable internal volume (116) defined by a vapor barrier (114) of a system (100) of any one of claims 6-12;
sealing the selectively sealable internal volume (116) with the electrochromic preform (202) inside; and
transporting the electrochromic preform (202) to a secondary location.

## Patentansprüche

1. Komponente (208), die angepasst ist, um mit einer Kante (204) einer elektrochromen Vorform (202) gekoppelt zu werden, umfassend:
einen Körper (602), der einen Eingriffsabschnitt (604) für die elektrochrome Vorform und einen Werkzeugeingriffsabschnitt (606) definiert, der mit dem Eingriffsabschnitt (604) für die elektrochrome Vorform schwenkbar gekoppelt ist,
wobei ein Reduzieren einer Abmessung des Werkzeugeingriffsabschnitts (606) eine entsprechende Abmessung in dem Eingriffsabschnitt (604) für die elektrochrome Vorform vergrößert,
wobei der Eingriffsabschnitt (604) für die elektrochrome Vorform einen Aufnahmebereich (608), der angepasst ist, um die elektrochrome Vorform (202) aufzunehmen, und eine Vielzahl von Vorsprüngen (618) umfasst, die sich in den Aufnahmebereich (608) erstrecken,
**dadurch gekennzeichnet, dass** der Aufnahmebereich (608) ein Anschlagmerkmal (622) umfasst, das angepasst ist, um ein zu tiefes Einführen der elektrochromen Vorform (202) in den Aufnahmebereich (608) zu verhindern,
wobei der Werkzeugeingriffsabschnitt (606) eine erste Vorspannoberfläche (626), eine zweite Vorspannoberfläche (628) und ein verformbares Element (632) umfasst, das zwischen der ersten und der zweiten Vorspannoberfläche (626, 628) angeordnet ist, und
wobei das Anschlagmerkmal (622) und das verformbare Element (632) durch einen Abschnitt des Körpers (602) voneinander beabstandet sind, der einem Schwenkpunkt (624) zwischen dem Eingriffsabschnitt (604) für die elektrochrome Vorform und dem Werkzeugeingriffsabschnitt (606) entspricht.

2. Komponente (208) nach Anspruch 1, wobei mindestens einer der Vorsprünge (618) entlang einer Ausgleichsgeraden liegt, die in einem Winkel, wie in Bezug auf eine Seitenwand (610, 612) der Komponente (208) gemessen, in einem Bereich von 1° und 89° angeordnet ist.

3. Komponente (208) nach Anspruch 1, wobei sich mindestens zwei Vorsprünge (618) der Vielzahl von Vorsprüngen (618) um unterschiedliche Distanzen von der Seitenwand (610, 612) der Komponente (208) in den Aufnahmebereich (608) erstrecken.

4. Komponente (208) nach Anspruch 1, wobei das Anschlagmerkmal (622) ein verformbares Material, wie ein Elastomer, umfasst.

5. Komponente (208) nach Anspruch 4, wobei der Eingriffsabschnitt (604) für die elektrochrome Vorform eine erste Seitenwand (610) und eine zweite Seitenwand (612) umfasst, die durch den Aufnahmebereich (608) voneinander beabstandet sind, und wobei mindestens eine der Seitenwände (610, 612) einen Flansch (614) neben einem distalen Ende der mindestens einen Seitenwand (610, 612) umfasst, und wobei sich der Flansch (614) über eine Distanz, D_{F}, erstreckt, wie von der Seitenwand (610, 612) gemessen, wobei sich mindestens einer der Vorsprünge (618) über eine Distanz, D_{P}, erstreckt und wobei D_{F} im Bereich von 0,1 D_{P} und 2,0 D_{P} liegt.

6. System (100) zum Aufnehmen von elektrochromen Vorformen (202), umfassend:
eine starre Struktur (102), die ein Fach (104) definiert; und
eine Dampfsperre (114), die innerhalb des Fachs (104) angeordnet ist und angepasst ist, um ein selektiv versiegelbares Innenvolumen (116) zu definieren,
wobei eine Vielzahl von elektrochromen Vorformen (202) in dem Innenvolumen (116) aufnehmbar ist und wobei das Innenvolumen (116) ein Referenzwerkzeug (124) zum Ausrichten mindestens einer der Vielzahl von elektrochromen Vorformen (202) definiert,
wobei das System (100) ferner mindestens eine Komponente (208) nach einem der vorstehenden Ansprüche umfasst.

7. System (100) nach Anspruch 6, wobei die starre Struktur (102) eine mehrteilige starre Struktur einschließlich mindestens 6 Seitenwänden (106) umfasst.

8. System (100) nach Anspruch 7, wobei die Dampfsperre (114) definiert:
eine Wandstärke im Bereich von 0,0254 mm bis 2,54 mm (1 mil und 100 mil), wie nach ASTM D2103 gemessen, oder eine Zugfestigkeit von mindestens 1,75 N/mm (10 lbs/in), wie nach ASTM D882 gemessen.

9. System (100) nach Anspruch 6, wobei die Dampfsperre (114) eine Sauerstoffdurchlässigkeitsrate (OTR) im Bereich von 0,645 cm³/m²/24 h (0,0001 cm³/100 Zoll²/Tag) und 6,45 cm³/m²/24 h (0,001 cm³/100 Zoll²/Tag) aufweist, wie gemäß ASTM D3985 gemessen, oder eine Wasserdampfdurchlässigkeitsrate (WVTR) in einem Bereich von 0,645 cm³/m²/24 h (0,0001 cm³/100 Zoll²/Tag) und 6,45 cm³/m²/24 h (0,001 cm³/100 Zoll²/Tag) aufweist, wie gemäß ASTM F1249 gemessen.

10. System (100) nach einem der Ansprüche 7 bis 9, wobei die Dampfsperre (114) angepasst ist, um bei Einwirkung einer Temperatur von mindestens 204,4 °C (400 °F) und eines Drucks von mindestens 0,28 MPa (40 PSI) für eine Zeit von mindestens 1 Sekunde selektiv versiegelbar zu sein.

11. System (100) nach Anspruch 6, wobei das Innenvolumen (116) in einem geschlossenen, unvorgespannten Zustand ein Volumen, V_{MIN}, aufweist, das kleiner als ein Volumen, V_{EP}, des Innenvolumens ist, wenn es mit elektrochromen Vorformen (202) gefüllt ist, und wobei V_{MIN} kleiner als 0,99 V_{EP} und nicht kleiner als 0,25 V_{EP} IST.

12. System (100) nach Anspruch 6, wobei das System (100) angepasst ist, um aufzunehmen:
eine erste elektrochrome Vorform (202) neben dem Referenzwerkzeug (124),
eine dritte elektrochrome Vorform (202), und
eine zweite elektrochrome Vorform (202), die zwischen der ersten und der dritten elektrochromen Vorform (202) angeordnet ist,
wobei sich ein kürzester Abstand zwischen der ersten elektrochromen Vorform (202) und dem System (100) von einem Abstand zwischen der zweiten und der dritten elektrochromen Vorform (202) unterscheidet.

13. Verfahren zum Transportieren einer elektrochromen Vorform (202), umfassend:
an einer ersten Stelle, Bewegen der elektrochromen Vorform (202) in Richtung eines selektiv versiegelbaren Innenvolumens (116), das durch eine Dampfsperre (114) eines Systems (100) nach einem der Ansprüche 6 bis 12 definiert ist;
Versiegeln des selektiv versiegelbaren Innenvolumens (116) mit der elektrochromen Vorform (202) darin; und
Transportieren der elektrochromen Vorform (202) zu einer sekundären Stelle.

## Revendications

1. Composant (208) conçu pour s'accoupler avec un bord (204) d'une préforme électrochromique (202) comprenant :
un corps (602) définissant une partie de mise en prise de préforme électrochromique (604) et une partie de mise en prise d'outil (606) accouplée de façon pivotante à la partie de mise en prise de préforme électrochromique (604),
dans lequel une réduction d'une dimension de la partie de mise en prise d'outil (606) augmente une dimension correspondante dans la partie de mise en prise de préforme électrochromique (604),
dans lequel la partie de mise en prise de préforme électrochromique (604) comprend une zone de réception (608) conçue pour recevoir la préforme électrochromique (202), et une pluralité de saillies (618) s'étendant dans la zone de réception (608),
**caractérisé en ce que** la zone de réception (608) comprend une caractéristique d'arrêt (622) conçue pour empêcher une insertion excessive de la préforme électrochromique (202) dans la zone de réception (608),
dans lequel la partie de mise en prise d'outil (606) comporte une première surface de sollicitation (626), une seconde surface de sollicitation (628) et un élément déformable (632) disposé entre les première et seconde surfaces de sollicitation (626, 628), et
dans lequel la caractéristique d'arrêt (622) et l'élément déformable (632) sont espacés d'une partie du corps (602) correspondant à un point de pivot (624) entre la partie de mise en prise de préforme électrochromique (604) et la partie de mise en prise d'outil (606).

2. Composant (208) selon la revendication 1, dans lequel au moins l'une des saillies (618) se trouve le long d'une ligne d'ajustement optimal disposée selon un angle, tel que mesuré par rapport à une paroi latérale (610, 612) du composant (208), dans une plage de 1° et 89°.

3. Composant (208) selon la revendication 1, dans lequel au moins deux saillies (618) de la pluralité de saillies (618) s'étendent à différentes distances par rapport à la paroi latérale (610, 612) du composant (208) dans la zone de réception (608).

4. Composant (208) selon la revendication 1, dans lequel la caractéristique d'arrêt (622) comprend un matériau déformable, tel qu'un élastomère.

5. Composant (208) selon la revendication 4, dans lequel la partie de mise en prise de préforme électrochromique (604) comprend une première paroi latérale (610) et une seconde paroi latérale (612) espacées l'une de l'autre par la zone de réception (608) et dans lequel au moins l'une des parois latérales (610, 612) comprend un rebord (614) adjacent à une extrémité distale de l'au moins une paroi latérale (610, 612) et dans lequel le rebord (614) s'étend à une distance, D_{F}, telle que mesurée à partir de la paroi latérale (610, 612), dans lequel au moins l'une des saillies (618) s'étend à une distance, D_{P}, et dans lequel D_{F} est dans une plage de 0,1 D_{P} et 2,0 D_{P}.

6. Système (100) destiné à contenir des préformes électrochromiques (202) comprenant :
une structure rigide (102) définissant un compartiment (104) ; et
un pare-vapeur (114) disposé au sein du compartiment (104) et conçu pour définir un volume interne (116) pouvant être obturé hermétiquement de façon sélective,
dans lequel une pluralité de préformes électrochromiques (202) peuvent être reçues dans le volume interne (116), et dans lequel le volume interne (116) définit un outil de référence (124) permettant d'aligner au moins l'une parmi la pluralité de préformes électrochromiques (202),
dans lequel le système (100) comprend en outre au moins un composant (208) selon l'une quelconque des revendications précédentes.

7. Système (100) selon la revendication 6, dans lequel la structure rigide (102) comprend une structure rigide à pièces multiples comportant au moins 6 parois latérales (106).

8. Système (100) selon la revendication 7, dans lequel le pare-vapeur (114) définit :
une épaisseur de paroi dans une plage de 0,0254 mm et 2,54 mm (1 mil et 100 mil), telle que mesurée selon ASTM D2103, ou une résistance en traction d'au moins 1,75 N/mm (10 livres/po), telle que mesurée selon ASTM D882.

9. Système (100) selon la revendication 6, dans lequel le pare-vapeur (114) comprend un taux de transmission d'oxygène (OTR) dans une plage de 0,645 cm³/m²/24 h (0,0001 cm³/100 po²/jour) et 6,45 cm³/m²/24 h (0,001 cm³/100 po²/jour), tel que mesuré selon ASTM D3985 ou un taux de transmission de vapeur d'eau (WVTR) dans une plage de 0,645 cm³/m²/24 h (0,0001 cm³/100 po²/jour) et 6,45 cm³/m²/24 h (0,001 cm³/100 po²/jour), tel que mesuré selon ASTM F1249.

10. Système (100) selon l'une quelconque des revendications 7 à 9, dans lequel le pare-vapeur (114) est conçu pour pouvoir être obturé hermétiquement de façon sélective lors de l'application d'une température d'au moins 204,4 °C (400 °F), d'une pression d'au moins 0,28 MPa (40 PSI), pendant un temps d'au moins 1 seconde.

11. Système (100) selon la revendication 6, dans lequel, dans un état fermé non sollicité le volume interne (116) a un volume, V_{MIN}, inférieur à un volume, V_{EP}, du volume interne lorsqu'il est rempli de préformes électrochromiques (202) et dans lequel V_{MIN} est inférieur à 0,99 V_{EP} et n'est pas inférieur à 0,25 V_{EP}.

12. Système (100) selon la revendication 6, dans lequel le système (100) est conçu pour recevoir :
une première préforme électrochromique (202) adjacente à l'outil de référence (124),
une troisième préforme électrochromique (202), et
une deuxième préforme électrochromique (202) disposée entre les première et troisième préformes électrochromiques (202),
dans lequel une distance la plus proche entre la première préforme électrochromique (202) et le système (100) est différente d'une distance entre les deuxième et troisième préformes électrochromiques (202).

13. Procédé de transport d'une préforme électrochromique (202) comprenant :
au niveau d'une première localisation, le déplacement de la préforme électrochromique (202) en direction d'un volume interne (116) pouvant être obturé hermétiquement de façon sélective, défini par un pare-vapeur (114) d'un système (100) selon l'une quelconque des revendications 6 à 12 ;
l'obturation hermétique du volume interne (116) pouvant être obturé hermétiquement de façon sélective avec la préforme électrochromique (202) à l'intérieur ; et
le transport de la préforme électrochromique (202) à une localisation secondaire.
